# EUROPEAN PATENT SPECIFICATION

(11) **EP 1 234 012 B1**
(45) Date of publication and mention of the grant of the patent: **13.02.2008**
(21) Application number: 00973092.0
(22) Date of filing: 08.11.2000
(51) Int. Cl.: C09K 21/14, C08K 3/04, F16L 21/00

(54) **INTUMESCENT PIPE COUPLING**
AUFBLÄHENDE ROHRKUPPLUNG
RACCORD DE TUYAUX INTUMESCENT

(30) Priority: 12.11.1999 GB 9926890
(43) Date of publication of application: 28.08.2002
(73) Proprietor: Cobri Technologies, Inc., Woodbridge, ON L4L 8P3 (CA)
(72) Inventor: ASHLING, Geoffrey Edward, Norwood Hill, Surrey RH6 0ET (GB); COULTER, Robert Glyn, Broadstone, Dorset BH18 8LF (GB); SMITH, Wayne, Rugeley, Staffordshire WS15 1DE (GB)
(74) Representative: W.P. Thompson & Co.
(86) International application number: PCT/GB2000/004281
(87) International publication number: WO 2001/034724

(56) References cited:
- EP-A- 0 297 888
- EP-A- 0 729 999
- EP-A- 0 730 000
- WO-A-98/30654
- WO-A-99/60074
- US-A- 5 934 333

## Description

This invention relates to intumescent pipe couplings.

Known intumescent fire-stop or penetration-sealing products include: sealants and mastics which comprise exfoliating graphite in a suitable carrier material; intumescent pipe bands, collars and wraps; intumescent blocks, grills and strips; intumescent fire pillows; intumescent expansion joints; intumescent cavity and lap-jointing seals; intumescent paints; lightweight cavity barriers; and doorstrips which comprise intumescent material. All the intumescent products mentioned may contain exfoliating graphite.

These products are incorporated into buildings, automobiles, aircraft, ships and boats at various stages and places in their construction or refitting and all have the property of intumescing when subjected to the heat of a fire and thereby closing a passageway through which the fire, flame and/or smoke would otherwise spread. The products thereby protect the elements of the building from structural collapse and may also allow a means of escape according to prescribed requirements in the relevant country or other geographical area.

The products are however subject to disadvantages in that their incorporation into or onto the structure of a building, automobile, aircraft, ship or boat is a time-consuming operation or, in certain cases, the products themselves (e.g. cavity seals, lap joints, lightweight cavity barriers and doorstrips) are difficult to manufacture as they consist of assemblies of two or more component parts.

EP0730000 discloses fire retardant polymer compositions comprising 100 parts by weight of a polymer such as polystyrene, 1 to 30 parts by weight of heat-expandable graphite and 1 to 30 parts by weight of a phosphorus compound.

EP0729999 discloses fire retardant polymer compositions comprising 100 parts by weight of a polymer such as polyolefins and polystyrenes, 1 to 30 parts by weight of an oxide or a complex oxide of metals such as antimony, boron and molybdenum, and 1 to 30 parts by weight of heat-expandable graphite.

EP0297888 discloses electroconductive resin compositions containing (i) 100 parts by weight of thermoplastic resins and/or thermosetting resins and (ii) 15 to 150 parts by weight of (a) carbon black having a DPB oil absorption amount of 400ml/100g or more and (b) expanded graphite having an average particle size of 40µm or more, wherein the expanded graphite content is 40 to 90% by weight of the total amount of the carbon black and the expanded graphite.

US 5934333 discloses a fire-retardant moulding composition for moulded objects such as pipes and pipe cuffs including a thermoplastic matrix including a matrix stabiliser and intumescent components including expandable graphite.

WO 99/60074 discloses intumescent compositions containing exfoliating graphite and a carrier which is preferably polyvinyl chloride, polyethylene or polypropylene.

The present invention provides an intumescent pipe coupling having a hollow circular body enlarged at each end to couple with a pipe obtainable by injection molding an intumescent material comprising a mixture of exfoliating graphite and a carrier material comprising one or more of polyvinyl chloride, polyethylene, polypropylene, polyethylene-polypropylene copolymer, acrylic polymer or copolymer, metallocene polymer, polyphthalamide (PPA), crystalline polystyrene, polycarbonate, acrylonitrile-butadiene-styrene (ABS), silicone rubber or polymer, or natural and synthetic polymer and rubber latexes.

The amount of carrier material in the composition is preferably from 30 to 65%, more preferably 30 to 55%, most preferably 30 to 45%, by weight of the composition.

The amount of exfoliating graphite is preferably from 5 to 50% by weight, more preferably 15 to 45% by weight, most preferably 25 to 35% by weight of the composition.

The injection moulding process is preferably a one-shot injection moulding process, a two-shot injection moulding process or a gas-assisted injection moulding process.

Pipe couplings of the invention preferably contain one or more plasticisers, at least one of which preferably has a fire-retardant effect.

The or at least one of the plasticisers is preferably a phthalate plasticiser.

The plasticiser(s) are suitably present in an amount of up to 35% by weight of the composition or mixture, preferably from 10 to 30% by weight, more preferably 20 to 30% by weight.

The pipe couplings of the invention preferably also contain one or more stabilisers, preferably of low toxicity, suitably in a total amount of up 1% by weight of the composition or mixture, preferably 0.015 to 0.025% by weight.

Pipe couplings of the invention may contain an inert filler, preferably in an amount of 4 to 6% by weight of the composition or mixture.

Suitable exfoliating graphite materials are those sold under the names "Callotek 50", "Callotek 100", "Callotek 200", "Callotek 500" and "Callotek 600" and available from P.F.C. Surechem Limited of Davis Road, Chessington, Surrey, KT9 1TV, United Kingdom.

A typical single-shot injection-moulding process is one in which the composition or mixture to be moulded is injected into a mould or tool under pressure and solidifies to form a finished product.

A typical two-shot injection moulding process is one in which the composition or mixture to be moulded is injected into a mould or tool by a first injection unit and the mould or tool is then rotated and a second composition or mixture is injected by a second injection unit to provide a second body of material moulded over the first, for example when aesthetic considerations are important.

A typical gas-assisted injection moulding process is one in which the composition or mixture to be moulded is injected into a mould or tool and a gas under high pressure is also shot into the mould or tool to hollow-out certain parts of the finished product which would otherwise be thicker.

In another aspect, the present invention provides a pipe coupling of the invention in which said circular body is encased in a second, non-intumescent plastics material.

The non-intumescent material is a plastics material, preferably polyvinyl chloride.

The terms "polyvinyl chloride" and "PVC" are each used throughout this specification and its claims to cover plasticised and unplasticised polyvinyl chloride and also derivatives of both those materials. Similarly the terms "polyethylene" and "polypropylene" used to cover both these materials themselves and also derivatives thereof.

The invention will be described further by way of the following examples 1 to 3.

| ingredient | amount (g) | | |
|---|---|---|---|
| | example 1 | example 2 | example 3 |
| PVC granules | 380 | - | - |
| PVC powder | - | 100 | 100 |
| PVC-compatible stabiliser/lubricant | 0.2 | - | - |
| dioctyl phthalate plasticiser | 150 | 52 | - |
| acrylonitrile-butadiene-styrene impact modifier | - | - | 8 |
| acrylic process aid | - | - | 1.5 |
| epoxidised soya bean oil | - | 5 | 1.5 |
| barium-zinc stabiliser | - | 2 | - |
| tin stabiliser | - | - | 2.5 |
| fatty acid ester glycerine lubricant | - | - | 1.2 |
| paraffin wax | - | - | 0.4 |
| chlorinated paraffin (fire retardant plasticiser) | 110 | 30 | - |
| Callotek 500 exfoliating graphite | 310 | 85 | 50 |
| PVC-compatible inert filler | 49.8 | - | 7 |
| TOTAL | 1000 | 274 | 172.1 |

Embodiments of the invention will now be described by way of example with reference to the drawings, in which:
Figure 1 is a side view of a pipe coupling having a single-walled construction;
Figure 2 is a section on the line VI-VI of Figure 1;
Figure 3 is a side view of a pipe coupling having a twinwalled construction;
Figure 4 is a section on the line VIII-VIII of Figure 3;

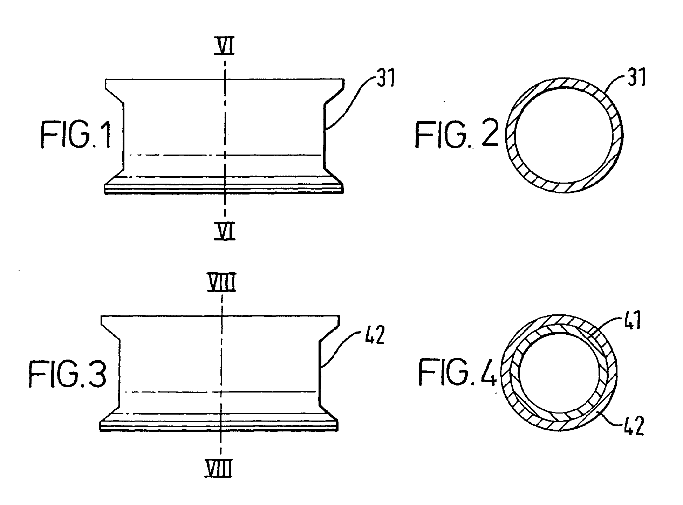

The pipe coupling 31 shown in figures 1 and 2 of the drawings was produced by a single-shot injection moulding process using a composition according to example 2. The injection moulding machine used was a DGP Windsor SPH machine fitted with a suitable tool. Another coupling were made on the same machine from a composition according to example 3. Similar couplings using compositions according to examples 2 and 3 were made using a DGP Windsor FRC injection moulding machine.

The pipe coupling shown in figures 3 and 4 of the drawings has an inner layer 41 of a material according to the invention and an outer layer 42 of polyvinyl chloride which is coloured for aesthetic reasons. The coupling was made by a two-shot injection moulding process using a DGP Windsor SPH machine fitted with a suitable tool. The first material to be introduced was in accordance with example 2; the second material was polyvinyl chloride. Another coupling was made on the same machine replacing the composition according to example 2 by a composition according to example 3. Similar couplings using compositions according to examples 2 and 3 were made using a DGP Windsor FRC injection moulding machine.

The products according to the invention described above were tested for compliance with fire safety requirements by heating in a furnace at a temperature and for a time specified by the relevant test requirements. All products were found to exhibit good intumescent firestop characteristics.

## Claims

1. An intumescent pipe coupling having a hollow circular body enlarged at each end to couple with a pipe obtainable by injection molding an intumescent material comprising a mixture of exfoliating graphite and a carrier material comprising one or more of polyvinyl chloride, polyethylene, polypropylene, polyethylene-polypropylene copolymer, acrylic polymer or copolymer, metallocene polymer, polyphthalamide (PPA), crystalline polystyrene, polycarbonate, acrylonitrile-butadiene-styrene (ABS), silicone rubber or polymer, or natural and synthetic polymer and rubber latexes.

2. A pipe coupling as claimed in claim 1, in which said circular body is encased in a non-intumescent plastics material.

3. A piple coupling as claimed in claim 2, in which said non-intumescent material is polyvinyl chloride.

4. A pipe coupling as claimed in any preceding claim, in which the amount of carrier in said mixture is from 30% to 65% by weight of the mixture.

5. A pipe coupling as claimed in any preceding claim, in which the amount of exfoliating graphite in said mixture is from 5% to 50% by weight of the mixture.

6. A pipe coupling as claimed in any preceding claim, containing at least one plasticiser, and in which the total amount of plasticiser(s) in said mixture is from 10% to 30% by weight of the mixture.

7. A pipe coupling as claimed in any preceding claim, containing at least one inert filler, and in which the total amount of filler(s) in said mixture is from 4% to 6% by weight of the mixture.

## Patentansprüche

1. Aufblähende Rohrkupplung mit einem hohlen kreisförmigen Körper, der an beiden Enden vergrößert ist, um mit einem Rohr zu kuppeln, die durch Spritzgießen eines aufblähenden Materials erhalten werden kann, das ein Gemisch aus Schuppengraphit und einem eines oder mehrere von Polyvinylchlorid, Polyethylen, Polypropylen, Polyethylen-Polypropylen-Copolymer, Acrylpolymer oder -copolymer, Metallocenpolymer, Polyphthalamid (PPA), kristallinem Polystyrol, Polycarbonat, Acrylonitril-Butadien-Styren (ABS), Silikonkautschuk oder -polymer oder natürlichen und synthetischen Polymer- und Kautschuklatexen umfassenden Trägermaterial umfasst.

2. Rohrkupplung nach Anspruch 1, wobei der genannte kreisförmige Körper von einem nicht aufblähenden Kunststoffmaterial ummantelt ist.

3. Rohrkupplung nach Anspruch 2, wobei es sich bei dem genannten nicht aufblähenden Material um Polyvinylchlorid handelt.

4. Rohrkupplung nach einem der vorangehenden Ansprüche, wobei die Menge des Trägers im genannten Gemisch von 30 bis 65 Gewichtsprozent des Gemischs beträgt.

5. Rohrkupplung nach einem der vorangehenden Ansprüche, wobei die Menge des Schuppengraphits im genannten Gemisch von 5 bis 50 Gewichtsprozent des Gemischs beträgt.

6. Rohrkupplung nach einem der vorangehenden Ansprüche, enthaltend mindestens einen Weichmacher und wobei die Gesamtmenge des beziehungsweise der Weichmacher im genannten Gemisch von 10 bis 30 Gewichtsprozent des Gemischs beträgt.

7. Rohrkupplung nach einem der vorangehenden Ansprüche, enthaltend mindestens einen inerten Füllstoff und wobei die Gesamtmenge des beziehungsweise der Füllstoff(e) im genannten Gemisch von 4 bis 6 Gewichtsprozent des Gemischs beträgt.

## Revendications

1. Raccord de tuyau intumescent ayant un corps circulaire creux élargi à chaque extrémité à des fins de raccordement à un tuyau réalisable par moulage par injection d'un matériau intumescent comportant un mélange de graphite exfoliable et un matériau support comportant un ou plusieurs parmi du polychlorure de vinyle, du polyéthylène, du polypropylène, du copolymère d'éthylènepropylène, du polymère ou copolymère acrylique, du polymère métallocène, du polyphthalamide (PPA), du polystyrène cristallin, du polycarbonate, de l'acrylonitrile-butadiène-styrène (ABS), du polymère ou caoutchouc de silicone, ou des latex de caoutchouc et polymère du type naturel et synthétique.

2. Raccord de tuyau selon la revendication 1, dans lequel ledit corps circulaire est enrobé dans un matériau plastique non intumescent.

3. Raccord de tuyau selon la revendication 2, dans lequel ledit matériau non intumescent est du polychlorure de vinyle.

4. Raccord de tuyau selon l'une quelconque des revendications précédentes, dans lequel la quantité de support dans ledit mélange est de 30 % à 65 % en poids du mélange.

5. Raccord de tuyau selon l'une quelconque des revendications précédentes, dans lequel la quantité de graphite exfoliable dans ledit mélange est de 5 % à 50 % en poids du mélange.

6. Raccord de tuyau selon l'une quelconque des revendications précédentes, contenant au moins un plastifiant, et dans lequel la quantité totale de plastifiant(s) dans ledit mélange est de 10 % à 30 % en poids du mélange.

7. Raccord de tuyau selon l'une quelconque des revendications précédentes, contenant au moins une charge inerte, et dans lequel la quantité totale de charge(s) dans ledit mélange est de 4 % à 6 % en poids du mélange.
